(19) Europäisches Patentamt / European Patent Office / Office européen des brevets

(11) **EP 2 261 705 A2**

(12) **EUROPEAN PATENT APPLICATION**

(43) Date of publication:
**15.12.2010 Bulletin 2010/50**

(51) Int Cl.:
*G02B 6/00* (2006.01)     *F21V 8/00* (2006.01)

(21) Application number: **10164413.6**

(22) Date of filing: **30.05.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(30) Priority: **01.06.2009 US 455382**

(71) Applicant: **SKC Haas Display Films Co., Ltd.
Choongchungnamdo (KR)**

(72) Inventor: **MI, Xiang-Dong
Rochester, NY 14623 (US)**

(74) Representative: **Buckley, Guy Julian
Patent Outsourcing Limited
1 King Street
Bakewell
Derbyshire DE45 1DZ (GB)**

(54) **Light guide plate for a backlight device**

(57)     The present invention provides a light guide plate comprising: (a) an input surface for receiving light from a light source into the light guide plate, (b) an output surface for emitting light, (c) a bottom surface opposing to the output surface, wherein discrete elements are located at least one of the output or bottom surface, the density function $D(x)$ of the discrete elements has a minimal value $D\mathrm{min}(x_{min})$ for $0.0 < x_{min} < 0.25$ and a value $D_0(x_0)$ for $x_0 < x_{min}$ and satisfies: $D_0/D_{min}-1 > 20\%$.

FIG. 6A

EP 2 261 705 A2

**Description**

**FIELD OF THE INVENTION**

This invention generally relates to display illumination systems for enhancing uniformity of luminance by using a light guide plate having discrete elements and emitting light with directionality.

**BACKGROUND OF THE INVENTION**

Liquid crystal displays (LCDs) continue to improve in cost and performance, becoming a preferred display type for many computer, instrumentation, and entertainment applications. The transmissive LCD used in conventional laptop computer displays is a type of backlit display, having a light providing surface positioned behind the LCD for directing light outwards, towards the LCD. The challenge of providing a suitable backlight apparatus having brightness that is sufficiently uniform while remaining compact and low cost has been addressed following one of two basic approaches. In the first approach, a light-providing surface is used to provide a highly scattered or diffusive light distribution, having luminance over a broad range of angles. Following this first approach, with the goal of increasing on-axis and near-axis luminance, a number of brightness enhancement films have been proposed for redirecting a portion of this light having diffusive distribution in order to provide a more collimated illumination.

A second approach to providing backlight illumination employs a light guiding plate (LGP) that accepts incident light from a lamp or other light source disposed at the side and guides this light internally using Total Internal Reflection (TIR) so that light is emitted from the LGP over a narrow range of angles. The output light from the LGP is typically at a fairly steep angle with respect to normal, such as 70 degrees or more. With this second approach, a turning film (TF), one type of light redirecting article, is then used to redirect the emitted light output from the LGP toward normal. Directional turning films, broadly termed light-redirecting articles or light-redirecting films, such as that provided with the HSOT (Highly Scattering Optical Transmission) light guide panel available from Clarex, Inc., Baldwin, NY, provide an improved solution for providing a uniform backlight of this type, without the need for diffusion films or for dot printing in manufacture. HSOT light guide panels and other types of directional turning films use arrays of prism structures, in various combinations, to redirect light from a light guiding plate toward normal, or toward some other suitable target angle that is typically near normal relative to the two-dimensional surface.

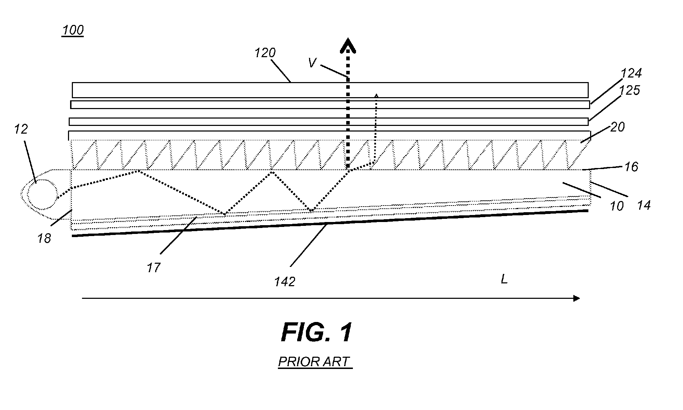

Referring to Figure 1, the overall function of a light guiding plate 10 in a display apparatus 100 is shown. Light from a light source 12 is incident at an input surface 18 and passes into light guiding plate 10 toward end surface 14, which is typically wedge-shaped as shown. Being reflected off output surface 16 and bottom surface 17, the light propagates within light guiding plate 10 until Total Internal Reflection (TIR) conditions are frustrated and then, reflected from a reflective film 142, and exits light guiding plate at an output surface 16. This light then goes to a turning film 20 and is directed to illuminate a light-gating device 120 such as an LCD or other type of spatial light modulator or other two-dimensional backlit component that modulates the light. For optimized viewing under most conditions, the emitted light should be provided over a range of relatively narrow angles about a normal V. An absorptive polarizer 124 is typically disposed in the illumination path in order to provide light-gating device 120 such as a liquid crystal cell with suitably polarized light for modulation. A reflective polarizer 125 is often provided between absorptive polarizer 124 and turning film 20.

Many of light guide plates using the second approach have a pattern comprising of a large number of discrete elements on either output surface 16 or bottom surface 17 to extract light uniformly along the length direction L. The density function of existing discrete elements generally increases monotonously with distance measured from the light source except with minor fluctuations. A light guide plate with such a density function is usually good for a diffusive BLU as discussed above referring to the first approach. The viewing angle of this type is typically 20-40 degrees. For a turning film based BLU that does not rely on light recycling, the existing density function does not provide uniform light output, especially near light sources. A typical turning film BLU using existing density function requires additional features near input surface 18, output surface 16, or bottom surface 17 of the light guide plate 10. The complexity of additional features on the LGP poses manufacturing challenges, increases costs, and thus hinders the adopting of it for turning film backlighting.

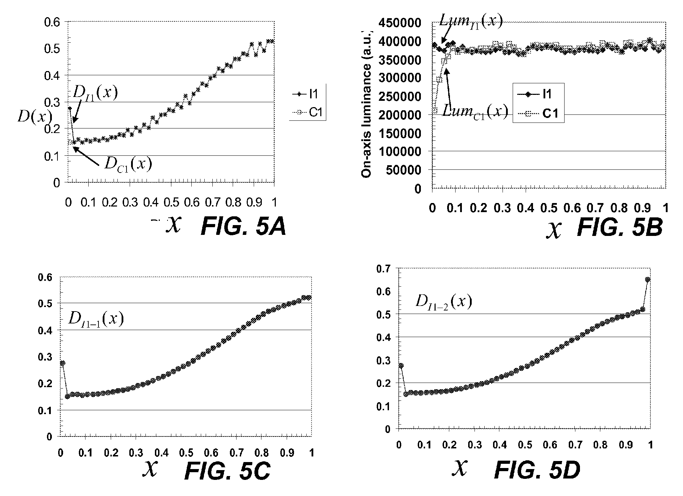

U.S. Patent No. 5,863,113 discloses a light guide plate that is used in combination with a turning film. The light guide plate has discrete elements such as convex lens on its bottom surface and the ratio of the flat areas of the convex lenses to the total area increases as the distance from the light incident surface increase. Namely, the density function of convex lenses monotonously increases over the distance from the light source, which is also shown in its Fig. 5(a) - Fig. 5(e). The increase in density function is achieved by an increase in size of the discrete elements.

Thus, while there have been solutions proposed for a turning film backlight unit, there remains a need for improved light guide plate for a turning film backlight unit.

**SUMMARY OF THE INVENTION**

The present invention provides a light guide plate comprising: (a) an input surface for receiving light from a light source into the light guide plate, (b) an output surface for emitting light, (c) a bottom surface opposing to the output surface, wherein discrete elements are located on the bottom surface, the density function D(x) of the discrete elements has a minimal value $D\mathrm{min}(x_{\mathrm{min}})$ for $0.0 < x_{\mathrm{min}} < 0.25$ and a value $D_0(x_0)$ for $x_0 < x_{\mathrm{min}}$ and satisfies: $D_0/D\mathrm{min}\text{-}1 > 20\%$.

The present invention further provides a light guide plate comprising: (a) an input surface for receiving light from a light source into the light guide plate, (b) an output surface for emitting light, (c) a bottom surface opposing to the output surface, wherein discrete elements are located on the output surface, the density function D(x) of the discrete elements has a minimal value $D\mathrm{min}(x_{\mathrm{min}})$ for $0.0 < x_{\mathrm{min}} < 0.25$ and a value $D_0(x_0)$ for $x_0 < x_{\mathrm{min}}$ and satisfies: $D_0 \, / \, D_{\mathrm{min}}\text{-}1 > 20\%$.

The present invention further provides a backlight unit comprising: a light source; a light guide plate comprising: (a) an input surface for receiving light from the light source into the light guide plate, (b) an output surface for emitting light, (c) a bottom surface opposing to the output surface, wherein discrete elements are located on at least one of the output or bottom surface, the density function $D(x)$ of the discrete elements has a minimal value $D\mathrm{min}(x_{\mathrm{min}})$ for $0.0 < x_{\mathrm{min}} < 0.25$ and a value $D_0(x_0)$ for $x_0 < x_{\mathrm{min}}$ and satisfies: $D_0 \, / \, D\mathrm{min}\text{-}1 > 20\%$ ; and a turning film for redirecting the light received from the output surface of the light guide plate.

**BRIEF DESCRIPTION OF THE DRAWINGS**

Figure 1 is a cross sectional view showing components of a conventional display apparatus;
Figures 2A and 2B show a bottom view and a side view of a light guide plate 200 of the present invention;
Figures 2C and 2D show a top view and a side view of a light guide plate 210 of the present invention;
Figure 2E shows the definition of the density function of discrete elements;
Figures 3A shows an exploded side view of light guide plate 200, a turning film 22, and a reflective film 142 in the direction parallel to the width direction;
Figures 3B shows an exploded side view of light guide plate 200 in the direction parallel to the length direction;
Figure 3C shows a top view of prisms 216;
Figures 4A-1, 4A-2, and 4A-3 show the perspective view, top view, and side view of the first kind of discrete element 227a according to the present invention;
Figures 4B-1, 4B-2, and 4B-3 show the perspective view, top view, and side view of the second kind of discrete element 227b according to the present invention;
Figures 4C-1, 4C-2, and 4C-3 show the perspective view, top view, and side view of the second kind of discrete element 227c according to the present invention;
Figure 5A shows a comparison between an inventive density function $D_{I1}(x)$ and a comparative density function $D_{C1}(x)$ ;
Figure 5B shows on-axis luminance measured after the light passes through the light guide plate with density functions shown in Figure 5A and the turning film;
Figure 5C shows an inventive density function $D_{I1\text{-}1}(x)$ which is a smoothed version of $D_{I1}(x)$ shown in Figure 5A;
Figure 5D shows an inventive density function $D_{I1\text{-}2}(x)$ that differs from $D_I(x)$ only near $x = 1$;

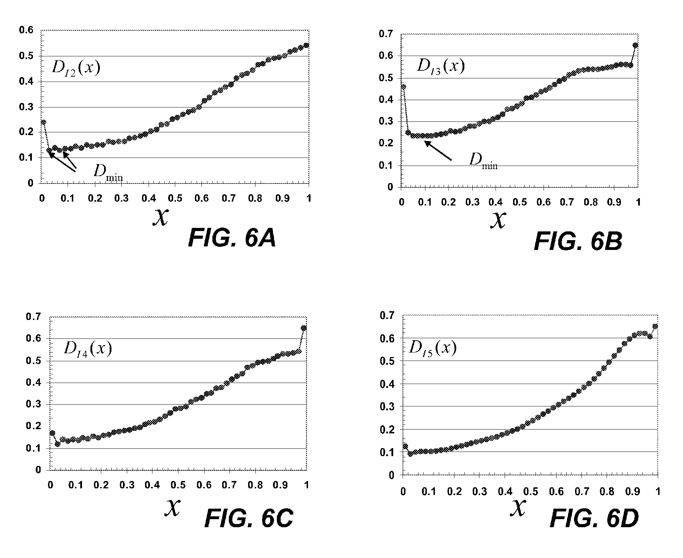

Figures 6A - 6H show various inventive density functions;

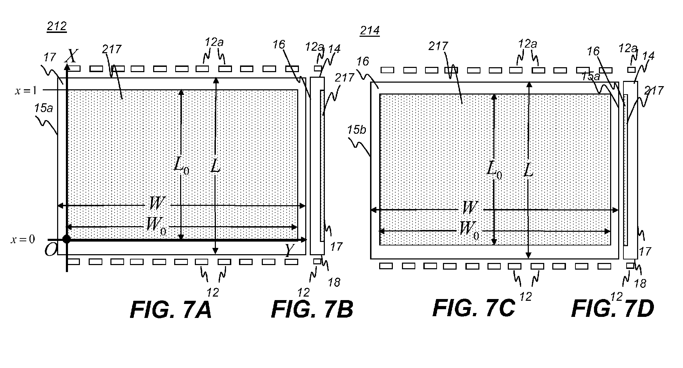

Figures 7A and 7B show a bottom view and a side view of a light guide plate 212 of the present invention;
Figures 7C and 7D show a top view and a side view of a light guide plate 214 of the present invention; and

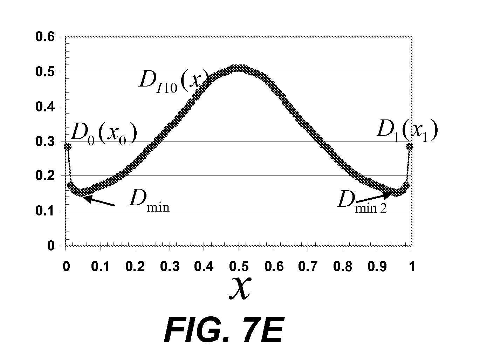

Figures 7E shows a density function of a light guide plate 212 or 214 of the present invention.

**DETAILED DESCRIPTION OF THE INVENTION**

The apparatus of the present invention uses light-redirecting structures that are generally shaped as prisms. True prisms have at least two planar faces. Because, however, one or more surfaces of the light-redirecting structures need not be planar in all embodiments, but may be curved or have multiple sections, the more general term "light redirecting structure" is used in this specification.

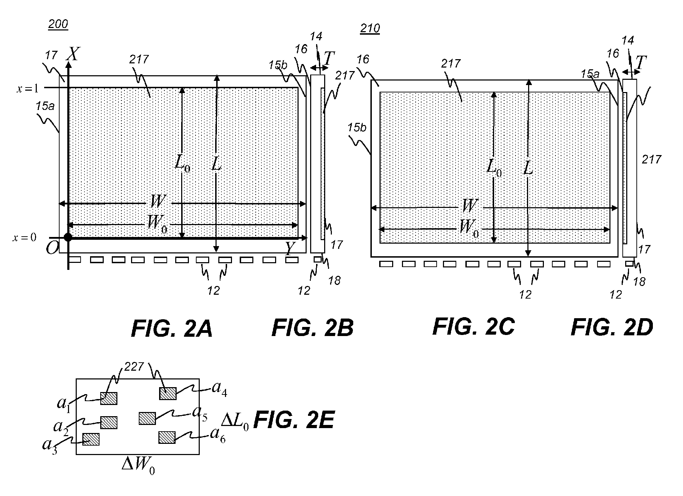

Figures 2A and 2B show a bottom view and a side view of a light guide plate 200 of the present invention, respectively. The light guide plate 200 has a length $L$, a width $W$, and a thickness $T$. Though the light guide plate 200 can be wedge shaped like the one shown in Figure 1A having a larger thickness near the light source and a smaller thickness far from the light source, the light guide plate 200 is generally a flat one, meaning that its thickness is generally uniform along the length direction. The variation of the thickness is usually less than 20%, more preferably less than 10%, and most preferably less than 5%. The thickness usually varies between 0.2 mm and 5 mm. The length $L$ and width $W$ usually vary between 20 mm and 500 mm depending on applications.

The light guide plate 200 has a pattern 217 of discrete elements represented by dots on its bottom surface 17. The pattern 217 has a length $L_0$ and a width $W_0$. Generally, the pattern has a smaller dimension than the light guide plate both in the length direction, and the width direction, or in both directions. Namely, $L_0 \leq L$ and $W_0 \leq W$. The size and number of discrete elements may vary along the length direction and the width direction.

The 2-dimensional (2D) density function of discrete elements $D^{2D}(x,y)$ at location $(x, y)$ is defined as the total area of discrete elements divided by the total area that contains the discrete elements, where $x = X / L_0$, $y = Y / W_0$, $X$ and $Y$ are the distance of a discrete element measured from origin $O$ along the length and width directions. The origin $O$ is chosen to be located at a corner of the pattern near input surface 18 of light guide plate 200 for convenience. In one example as shown in Figure 2E, six discrete elements 227 having areas of $a_1$, $a_2$, $a_3$, $a_4$, $a_5$, $a_6$ are located in a rectangle having a small area of $\Delta W_0 \cdot \Delta L_0$. The density of discrete elements in this small area is N $\sum_{i=1}^{N} a_i$ $/(\Delta W_0 \cdot \Delta L_0$ where N=6, representing the total number of discrete elements in the small area of $\Delta W_0 \cdot \Delta L_0$. The discrete elements may or may not have the same area.

Generally, the density function of discrete elements $D^{2D}(x,y)$ varies with location $(x,y)$. In practice, the density function $D^{2D}(x,y)$ varies slowly in one direction such as the width direction, while it varies rapidly in another direction, such as the length direction. For simplicity, one dimensional density function $D(x)$ is usually used to characterize a pattern of discrete elements and can be calculated as $D(x) = \int D^{2D}(x,y)dy \approx W_0 D^{2D}(x,0)$ in one example. Other forms of one-dimensional (1D) density function can also be easily derived from the 2D density function $D^{2D}(x,y)$. In the following, the variable x should be interpreted as any one that can be used to calculate a 1-dimensional density function $D(x)$. For example, x can be the radius from the origin $O$ if the light source is point-like and located near the corner of the light guide plate.

As shown in Fig. 2B, the light guide plate 200 has an light input surface 18 for coupling light emitted from light source 12, an output surface 16 for emitting light out of the light guide plate 200, an end surface 14 which is opposing to the input surface 18, a bottom surface 17 opposing to the output surface 16, and two side surfaces 15a, 15b. The light source can be a single linear light source such as a cold cathode fluorescent lamp (CCFL) or a plurality of point-like ones such as light emitting diodes (LEDs).

Figures 2C and 2D show a top view and a side view of an alternative light guide plate 210 of the present invention. Light guide plate 210 is similar to light guide plate 200 except that the pattern 217 is on the output surface 16 of light guide plate 210, while it is on the bottom surface of light guide plate 17 of light guide plate 200.

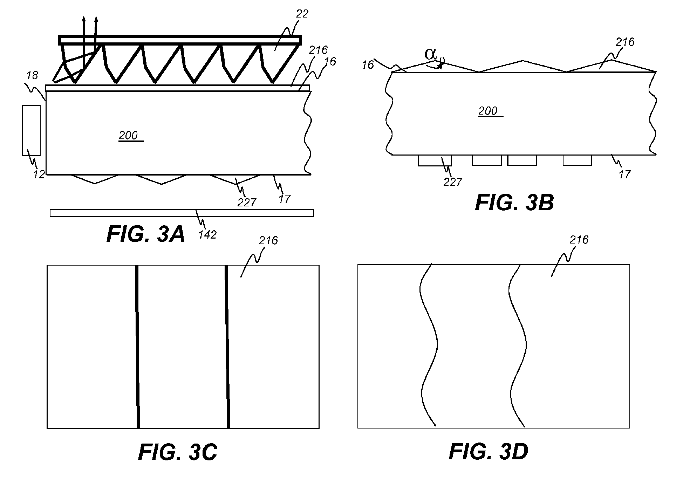

Figure 3A shows an exploded side view of light guide plate 200, a turning film 22, and a reflective film 142 in the direction parallel to the width direction. On the output surface 16 of light guide plate 200 are a plurality of prisms 216, and on the bottom surface 17 are a plurality of discrete elements 227. Figures 3B shows an exploded side view of light guide plate 200 in the direction parallel to the length direction. Each prism 216 on the output surface 16 generally has an apex angle $\alpha_0$. The prism may have a rounded apex. Figure 3C shows a top view of prisms 216. In this example, the prisms are parallel to each other. In another example as shown in Figure 3D, the prisms 216 are wavy-like. Prisms with any known modification may be used in the present invention. Examples include prisms with variable height, variable apex angle, and variable pitches.

Figures 4A-1, 4A-2, and 4A-3 show the perspective view, top view, and side view, respectively, of the first kind of discrete element 227a according to the present invention. Each discrete element is essentially a triangular segmented prism. Figures 4B-1, 4B-2, and 4B-3 show the perspective view, top view, and side view, respectively, of the second kind of discrete element 227b according to the present invention. Each discrete element is essentially a triangular segmented prism with a flat top. Figures 4C-1, 4C-2, and 4C-3 show the perspective view, top view, and side view, respectively, of the second kind of discrete element 227c according to the present invention. Each discrete element is essentially a rounded segmented prism.

EXAMPLES

Optical density

The optical density (OD) of a material can be computed from $OD = \dfrac{1}{L}\log_{10}(\dfrac{1}{Tr})$, where $Tr$ is the transmittance over a length $L$. A typical OD can approximately be between 0.0002 /mm and 0.0008 /mm for polymethyl methacrylate (PMMA), and between 0.0003 /mm and 0.0015 /mm for polycarbonate (PC), depending on the grade and purity of the material.

Inventive Example I1 and Comparative Example C1

In both inventive example I1 and comparative example C1, the light guide plate, made of a material with an optical density OD = 0.0004 /mm, has a length $L$ =188 mm, a width $W$ = 293 mm , and a thickness $T$ = 0.7 mm. It has linear prisms 216 having an apex angle of 152° on output surface 16. It also has a plurality of discrete elements as shown in Figures 4B-1, 4B-2, and 4B-3, each element having a size of about 80 $\mu$m ($\Delta L$ = 80 $\mu$m parallel to $L_0$) by 52.5 $\mu$m ($\Delta w$ = 52.5 $\mu$m parallel to $W_0$), and a base angle $\beta$ of about 9°. The pattern of discrete elements has a length $L_0$ =182.5 mm , a width $W_0$ = 289 mm. The reflective film 142 is a specular reflector, having a total reflection of about 97%.
Figure 5A shows two density function curves: one $D_{I1}(x)$ for the inventive example I1, and other one $D_{C1}(x)$ for the comparative example C1. They are identical for $0.03 \leq x \leq 1.0$. $x \equiv X / L_0$ is the normalized distance. However, $D_{C1}(x)$ primarily increases monotonously in the entire range $0 \leq x \leq 1.0$ , while $D_{I1}(x)$ primarily decreases with x when $0 \leq x \leq 0.03$ and primarily increases when $0.03 \leq x \leq 1$. $D_{I1}(x)$ has a minimum value of $D_{min} \approx 0.149$ when $x \approx 0.03$, and $D_{I1}(x = 0) \approx 0.275$. Therefore, $D_{I1}(x=0)/D_{min}$ -1$\approx$85%.
Figure 5B shows on-axis luminance curves $Lum_{I1}$ and $Lum_{C1}$, where $Lum_{I1}$ measures light passing through the light guide plate with the inventive density function $D_{I1}(x)$ and a turning film, while $Lum_{C1}$ measures light passing through the light guide plate with the comparative density function $D_{C1}(x)$ and the same turning film. It is clearly shown that the invention density function $D_{I1}(x)$ advantageously produces a relatively uniform on-axis luminance $Lum_{I1}$ for $0 \leq x \leq 1.0$ , while the comparative density function $D_{C1}(x)$ unfavorably produces a big drop in luminance near the light source for $0 \leq x \leq 0.09$. Note that this range of $0 \leq x \leq 0.09$ is much larger than the range of $0 \leq x \leq 0.03$ in which the two density functions differ.
The density function $D_{I1-1}(x)$ shown in Figure 5C is a smooth version of $D_{I1}(x)$ shown in Figure 5A. It produces on-axis luminance essentially the same as $Lum_{I1}$ of the inventive example I1.
The density function $D_{I1-2}(x)$ shown in Figure 5D is the same as $D_{I1-2}(x)$ except for x approaching 1.0, where $D(x =1)$ is forced to be equal to 0.65. This density function $D_{I1-2}(x)$ also produces on-axis luminance essentially the same as $Lum_{I1}$ of the inventive example I1. This is because very little amount of light can travel to the end surface of the light guide plate. Thus the density function near the end surface is less critical than that near the input surface.

Inventive Example I2

Inventive example I2 is the same as inventive example I1, except that the light guide plate is made of a material with an optical density OD = 0.0008 /mm instead of 0.0004 /mm.
Figure 6A shows that $D_{I2}(x)$ has a minimum value of $D_{min} \approx 0.130$ when $x \approx 0.03$ or $x \approx 0.07$ , and $D_{I2}(x = 0) \approx$ 0.240. Therefore, $D_{I2}=0)/D_{min}$ -1$\approx$85%.

Inventive Example I3

Inventive example I3 is the same as inventive example I2, except that each discrete element has a size of about 60 $\mu$m ($\Delta L$ = 60 $\mu$m parallel to $L_0$) by 46 $\mu$m ($\Delta w$ = 46 $\mu$m parallel to $W_0$).
Figure 6B shows that $D_{I3}(x)$ has a minimum value of $D_{min} \approx 0.235$ when x is between 0.05 and 0.13, and $D_{I3}(x = 0) \approx 0.457$. Therefore, $D_{I3}(x = 0)/D_{min}$-1 $\approx$ 94%.

Inventive Example I4

Inventive example I4 is the same as inventive example I1, except that the reflective film 142 is a white (or diffusive) reflector, having a total reflection of about 94%, with about 96% of diffusive component and about 4% of specular reflection.
Figure 6C shows that $D_{I4}(x)$ has a minimum value of $D_{min} \approx 0.117$ when $x \approx 0.03$ , and $D_{I4}(x = 0) \approx 0.170$. Therefore, $D_{I4}=0)/D_{min}$ -1$\approx$45%.

Inventive Example I5

In inventive example I5, the light guide plate, made of a material with an optical density OD = 0.0008 /mm, has a length $L$ =172 mm , a width $W$ = 265 mm , and a thickness $T$ = 0.4 mm. It has linear prisms 216 having an apex angle of 152° on output surface 16. It also has a plurality of discrete elements as shown in Figures 4B-1, 4B-2, and 4B-3, each element having a size of about 80 $\mu$m (parallel to $L_0$) by 52.5 $\mu$m (parallel to $W_0$), and a base angle $\beta$ of about 9°. The pattern of discrete elements has a length $L_0$ =167 mm , a width $W_0$ = 264 mm. The reflective film 142 is a white (or diffusive) reflector, having a total reflection of about 94%, with about 96% of diffusive component and about 4% of specular reflection.

Figure 6D shows that $D_{I5}(x)$ has a minimum value of $D_{min} \approx 0.089$ when $x \approx 0.03$, and $D_{I5}(x = 0) \approx 0.124$. Therefore, $D_{I5}$=0)/$D_{min}$ -1≈39%.

Inventive Example I6

Inventive example I6 is the same as inventive example I5 except that the light guide plate is made of a material with an optical density OD = 0.0004 /mm instead of 0.0008 /mm.

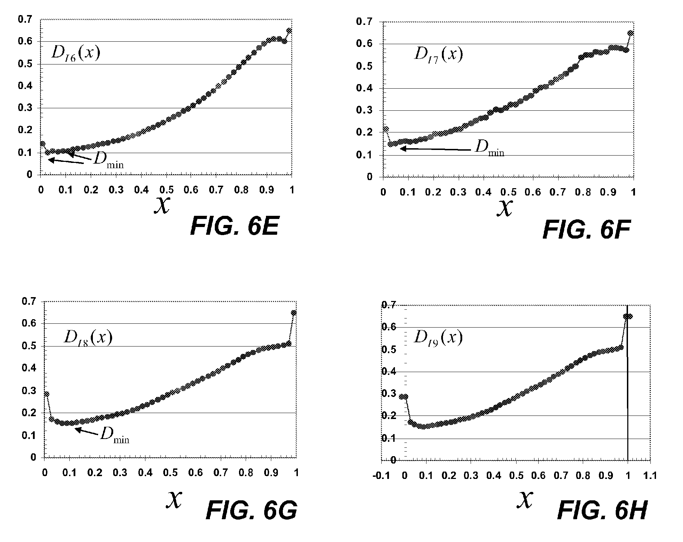

Figure 6E shows that $D_{I6}(x)$ has a minimum value of $D_{min} \approx 0.100$ when $0.03 \leq x \leq 0.10$, and $D_{I6}(x = 0) \approx 0.138$. Therefore, $D_{I6}$=0)/$D_{min}$ -1≈38%.

Inventive Example I7

Inventive example I7 is the same as inventive example I5 except that the light guide plate has a thickness of 0.7 mm instead of 0.4 mm.
Figure 6F shows that $D_{I7}(x)$ has a minimum value of $D_{min} \approx 0.147$ when $x \approx 0.03$, and $D_{I7}(x = 0) \approx 0.217$. Therefore, $D_{I7}(x = 0)/D_{min}$ -1≈48%.

Inventive Example I8

Inventive example I8 is the same as inventive example I7 except that the reflective film 142 is a specular reflector, having a total reflection of about 97%.
Figure 6G shows that $D_{I8}(x)$ has a minimum value of $D_{min} \approx 0.151$ when $x \approx 0.09$ , and $D_{I8}(x = 0) \approx 0.284$. Therefore, $D_{I8}$=0)/$D_{min}$ -1≈88%.

Discussions:

The maximum density $D_{max}$ of the discrete elements on the light guide plate is about 0.53 - 0.54 for inventive examples I1,I1-1, and I2, and is about 0.65 for inventive examples I1-2, and I3 - I8. Hence, the density function of the present invention has the same characteristic as discussed referring to inventive examples I1 - I8, independent of the maximum density $D_{max}$ of the discrete elements on the light guide plate. $D_{max}$ can vary between 0.3 and 1.0. The luminance output usually increases with increasing $D_{max}$. However, when $D_{max}$ is greater than about 0.4, an additional increase in on-axis luminance due to an increase in $D_{max}$ is small. When $D_{max}$ is greater than 0.9, the discrete elements are difficult to make due to small spacing between neighboring elements. Thus, $D_{max}$ is preferably in the range of 0.4 and 0.9.
The OD of the material used to make the light guide plate of the present invention is 0.0004 /mm in inventive examples I1, I1-1, I1-2, I4, and I6 and is 0.0008 /mm in inventive examples I2, I3, I5 - I8. Along with alternative inventive examples in which the OD vary from 0 to 0.003 /mm, it is concluded that the density function of the present invention has the same characteristics as discussed referring to inventive examples I1 - I8, independent of materials used for the light guide plate. Both the absorption (measured by OD) and the reflective index of the material do not change the characteristics of the density function. Namely, the light guide plate can be made of different grades of PC, PMMA and other suitable materials. Usually, a high grade of a material having a smaller absorption is preferred for producing higher luminance. However, it is also more expensive.
The thickness of the light guide plate is about 0.4 mm in inventive examples I1 - I4, and I5, and is 0.7 mm in inventive examples I5, I6, and I8. It can also be any other value. In most display applications, the thickness of the light guide plate vary between 0.3 mm and 4 mm. It is found that that the density function of the present invention has the same characteristic as discussed referring to inventive examples I1 - I8, independent of thicknesses of the light guide plate. In addition, the light guide plate can be generally flat with uniform thickness or have a wedge shape having a varying thickness.
The length and width of the light guide plate are $L$ =188 mm and width $W$ = 293 mm , respectively, in inventive examples I1 - I4, and are $L$ =172 mm and $W$ = 265 mm, respectively, in inventive examples I5 - I8. The length and width of the light guide plate can be any size useful for a display, from a few millimeters for a cell phone display, to a few hundred for a notebook display to even over a thousand millimeters for a TV display. It is found that the density function of the present invention has the same characteristic as discussed referring to inventive examples I1 - I8, independent of length and width of the light guide plate.
The reflective film 142 is specularly reflecting in inventive examples I1 - I3 and I8 and is primarily diffusive in inventive examples I4 - I7. It is found that the density function of the present invention has the same characteristic as discussed referring to inventive examples I1 - I8, independent of the optical property of the reflective film used in combination with the light guide plate. The optical property of the reflective film 142 can be specularly reflective, Lambertian reflective, or anywhere in between.

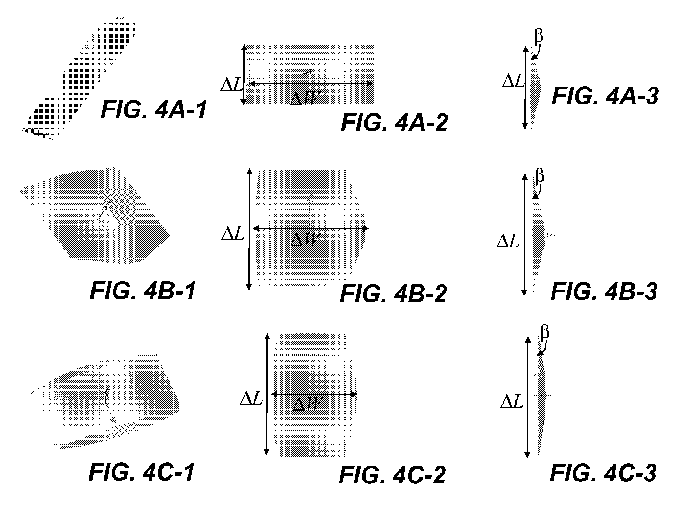

It is also found that the density function of the present invention has the same characteristic as discussed referring to inventive examples I1 - I8, independent of shape of the discrete elements (See Figures 4A1 - 4C3). Additionally, the discrete elements can be either bumps or holes. They can be symmetrical or asymmetrical. They can also be cylinder, hemisphere, concave or convex lenses as known in the art.

It is also found that the density function of the present invention has the same characteristic as discussed referring to inventive examples I1 - I8, independent of size of the discrete elements (30um to 200um).

It is also found that the density function of the present invention has the same characteristic as discussed referring to inventive examples I1 - I8, independent of the shape of the prisms on the surface that is opposing the surface on which the discrete elements are located. The prisms may also have variable height and variable pitch as known in the art.

It is also found that the density function of the present invention has the same characteristic as discussed referring to inventive examples I1 - I8, independent of the type of the light source 12 (CCFL or LEDs).

It is also found that the density function of the present invention has the same characteristic as discussed referring to inventive examples I1 - I8, independent of whether the discrete elements are on the bottom surface or on the output surface.

It is also found that the density function of the present invention has the same characteristic as discussed referring to inventive examples I1 - I8, independent of the type of the turning film 22.

Table 1 is a summary of examples discussed above.

Table 1: Summary of Examples (S: specular; D: diffusive)

| | $L$ (mm) | $W$ (mm) | $T$ (mm) | OD (/mm) | $\Delta L$ ($\mu$m) | $\Delta W$ ($\mu$m) | Max. density | Reflective film | $D_{mim}$ | $x_{min}$ | D(0) | D(0)/D$_{min}$-1 |
|---|---|---|---|---|---|---|---|---|---|---|---|---|
| I1 | 188 | 293 | 0.7 | 0.0004 | 80 | 52.5 | 0.52 | S | 0.149 | 0.0 | 0.275 | 85% |
| C1 | 188 | 293 | 0.7 | 0.0004 | 80 | 52.5 | 0.52 | S | 0.149 | 0.03 | 0.149 | 0% |
| I1-1 | 188 | 293 | 0.7 | 0.0004 | 80 | 52.5 | 0.52 | S | 0.149 | 0.03 | 0.275 | 85% |
| I1-2 | 188 | 293 | 0.7 | 0.0004 | 80 | 52.5 | 0.65 | S | 0.149 | 0.03 | 0.275 | 85% |
| I2 | 188 | 293 | 0.7 | 0.0008 | 80 | 52.5 | 0.54 | S | 0.130 | 0.03, 0.07 | 0.240 | 85% |
| 13 | 188 | 293 | 0.7 | 0.0008 | 60 | 46 | 0.65 | S | 0.235 | 0.05 0.13 | 0.457 | 94% |
| 14 | 188 | 293 | 0.7 | 0.0004 | 80 | 52.5 | 0.65 | D | 0.117 | 0.03 | 0.170 | 45% |
| 15 | 172 | 265 | 0.4 | 0.0008 | 80 | 52.5 | 0.65 | D | 0.089 | 0.03 | 0.124 | 39% |
| I6 | 172 | 265 | 0.4 | 0.0004 | 80 | 52.5 | 0.65 | D | 0.100 | 0.03, 0.10 | 0.138 | 38% |
| 17 | 172 | 265 | 0.7 | 0.0008 | 80 | 52.5 | 0.65 | D | 0.147 | 0.03 | 0.217 | 48% |
| 18 | 172 | 265 | 0.7 | 0.0008 | 80 | 52.5 | 0.65 | S | 0.151 | 0.09 | 0.284 | 88% |

Figure 6H shows an inventive density function $D_{I9}(x)$, which is a variation of density function $D_{I8}(x)$. $D_{I9}(x)$ is the same as $D_{I8}(x)$ for $0.0 \leq x \leq 1.0$. However, $D_{I9}(x)$ also has a nonzero value for $-x_1 \leq x < 0$, where $x_1 = 0.002$ and a nonzero value for $1 < x \leq 1 + x_2$, where $x_2 = 0.002$. In other cases, $x_1$ and/or $x_2$ can be as large as 0.02. Inventive density function $D_{I9}(x)$ usually makes the luminance output more uniform and may slightly reduce the luminance level.

Figures 7A- 7D show another embodiment of light guide plates 212, 214 of the present invention. Light guide plates 212, 214 are the same as light guide plates 200, 210 shown in Figures 2A - 2D, respectively, except that another light source 12a is located near end surface 14.

Figure 7E shows that the density function $D_{I11}(x)$ of the discrete elements has a value $D_0(x_0)$ for $0 < x_0 < 0.02$ and a local minimal value $Dmin(x_{min})$ for $0.02 < x_{min} < 0.25$, and has a value $D_1(x_1)$ for $0.98 < x_1 < 1$ and a local minimal value $D min 2(x_{min2})$ for $0.75 < x_{min2} < 0.98$, and satisfies: $D_0 / Dmin-1 > 20\%$ and $D_1 / D min 2 -1 > 20\%$. Note that the density function $D_{I11}(x)$ may or may not be symmetrical about the center of the light guide plate.

**Claims**

1. A light guide plate comprising:

    (a) an input surface for receiving light from a light source into the light guide plate,
    (b) an output surface for emitting light,
    (c) a bottom surface opposing to the output surface,

    wherein discrete elements are located on the bottom surface, the density function $D(x)$ of the discrete elements has a minimal value $Dmin(x_{min})$ for $0.0 < x_{min} < 0.25$ and a value $D_0(x_0)$ for $x_0 < x_{min}$ and satisfies: $D_0 /Dmin-1 > 20\%$

2. The light guide plate of claim 1 wherein $D_0 / Dmin-1 > 35\%$.

3. The light guide plate of claim 1 wherein $0.02 < x_{min} < 0.12$.

4. The light guide plate of claim 1 further comprising another input surface for receiving another light source into the light guide plate, wherein the another input surface is opposing to the other input surface.

5. The light guide plate of claim 4 wherein the density function $D(x)$ of the discrete elements has a value $D_1(x_1)$ for $0.98 < x_1 < 1$ and a local minimal value $D min 2(x_{min2})$ at $x = x_{min2}$, where $0.75 < x_{min2} < 0.98$, and satisfies: $D_1 / D min 2 -1 > 20\%$.

6. A light guide plate comprising:

    (a) an input surface for receiving light from a light source into the light guide plate,
    (b) an output surface for emitting light,
    (c) a bottom surface opposing to the output surface,

    wherein discrete elements are located on the output surface, the density function $D(x)$ of the discrete elements has a minimal value $Dmin(x_{min})$ for $0.0 < x_{min} < 0.25$ and a value $D_0(x_0)$ for $x_0 < x_{min}$ and satisfies: $D_0 / Dmin-1 > 20\%$

7. The light guide plate of claim 6 wherein $D_0 / Dmin-1 > 35\%$.

8. The light guide plate of claim 6 wherein $0.02 < x_{min} < 0.12$.

9. The light guide plate of claim 6 further comprising another input surface for receiving another light source into the light guide plate, wherein the another input surface is opposing to the other input surface.

10. A backlight unit comprising:

    a light source;
    a light guide plate comprising:

        (a) an input surface for receiving light from the light source into the light guide plate,
        (b) an output surface for emitting light,

**EP 2 261 705 A2**

(c) a bottom surface opposing to the output surface,

wherein discrete elements are located on at least one of the output or bottom surface, the density function $D(x)$ of the discrete elements has a minimal value $D\text{min}(x_{min})$ for $0.0 < x_{min} < 0.25$ and a value $D_0(x_0)$ for $x_0 < x_{min}$ and satisfies: $D_0 / D\text{min-1} > 20\%$ ; and

a turning film for redirecting the light received from the output surface of the light guide plate.

**FIG. 1**

PRIOR ART

**FIG. 2A**     **FIG. 2B**     **FIG. 2C**     **FIG. 2D**

**FIG. 2E**

FIG. 3A

FIG. 3B

FIG. 3C

FIG. 3D

FIG. 4A-1

FIG. 4A-2

FIG. 4A-3

FIG. 4B-1

FIG. 4B-2

FIG. 4B-3

FIG. 4C-1

FIG. 4C-2

FIG. 4C-3

FIG. 5A

FIG. 5B

FIG. 5C

FIG. 5D

FIG. 6A

FIG. 6B

FIG. 6C

FIG. 6D

FIG. 6E

FIG. 6F

FIG. 6G

FIG. 6H

**FIG. 7A**  **FIG. 7B**  **FIG. 7C**  **FIG. 7D**

*FIG. 7E*

**EP 2 261 705 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5863113 A